# FASCICULE DE BREVET EUROPEEN

(11) **EP 0 869 015 B1**
(45) Date de publication et mention de la délivrance du brevet: **03.07.2002**
(21) Numéro de dépôt: 98105476.0
(22) Date de dépôt: 26.03.1998
(51) Int. Cl.: B60C 9/18, B60C 9/02

(54) **Pneumatique à armature de sommet simplifiée**
Reifen mit vereinfachter Gürtelverstärkung
Tyre with simplified crown reinforcement

(30) Priorité: 02.04.1997 FR 9704247
(43) Date de publication de la demande: 07.10.1998
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: Costa Pereira, Pedro, 63000 Clermont-Ferrand (FR); Denoueix, Jean-Yves, 63112 Blanzat (FR); Osborne, Daniel Grier, Greer, South Carolina 29651 (US)
(74) Mandataire: Dequire, Philippe Jean-Marie Denis

(56) Documents cités:
- EP-A- 0 620 129
- EP-A- 0 705 717
- BE-A- 679 109
- DE-B- 1 039 382

## Description

L'invention concerne les sommets des pneumatiques et notamment les gommes de liaison en contact avec les fils de renforcement de ces sommets.

Les sommets des pneumatiques comprennent usuellement un renforcement de carcasse, un renforcement de ceinture avec usuellement au moins deux nappes de renforcement et une bande de roulement. Ces sommets sont en contact avec le sol et doivent notamment transmettre aux roues par l'intermédiaire des flancs et des bourrelets les efforts transversaux nécessaires pour guider les véhicules. Pour que le comportement routier des véhicules soit satisfaisant, il faut que les sommets aient une grande rigidité relativement par exemple aux flancs. C'est un objectif permanent d'essayer d'obtenir une telle rigidité élevée de façon simple et la plus économique possible.

Il est bien connu que les gommes de liaison des fils du renforcement de ceinture participent à l'obtention d'une rigidité élevée. C'est pourquoi, ces gommes de liaison ont usuellement un haut module d'élasticité. En revanche, les gommes de liaison des fils des carcasses ont usuellement un bas module d'élasticité parce qu'elles doivent supporter sans dommage les déformations élevées qu'elles subissent dans les flancs des pneumatiques.

Un tel pneumatique correspondant au préambule de la revendication 1 est décrit dans EP 0 620 129 A1.

D'autre part, de très nombreuses recherches sont actuellement menées pour diminuer la consommation d'essence des véhicules routiers. Dans ce but, on cherche à concevoir des pneumatiques ayant une résistance au roulement très basse tout en conservant les mêmes autres propriétés d'usure, d'adhérence, de comportement, etc. et de la façon la plus économique possible.

L'invention a pour objet un pneumatique dont la structure de sommet est perfectionnée pour faciliter son procédé de fabrication et ainsi le rendre plus économique, ainsi que pour améliorer sa qualité et ses performances.

L'invention a aussi pour objet, suivant une première variante, un mode de réalisation du pneumatique selon l'invention destiné principalement à améliorer la rigidité du sommet et, suivant une seconde variante, un mode de réalisation destiné principalement à abaisser la résistance au roulement.

Dans ce qui suit, on entend par « fil », aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage ou préencollage pour favoriser l'adhésion sur le caoutchouc.

On entend par « couche de gomme de liaison » pour une nappe de renforcement donnée le mélange caoutchoutique en contact avec les fils de renforcement de la nappe, adhérant à ceux-ci et remplissant les interstices entre fils adjacents. Dans la pratique industrielle courante, pour une nappe de renforcement de carcasse donnée, on utilise une même qualité de gomme de liaison pour les différentes zones du pneumatique.

On entend par « contact » entre un fil et une couche de gomme de liaison, le fait que, au moins une partie de la circonférence extérieure du fil est en contact intime avec le mélange caoutchoutique constituant de la gomme de liaison.

Par « module d'élasticité » d'un mélange caoutchoutique, on entend un module d'extension sécant obtenu à une déformation d'extension uniaxiale de l'ordre de 10 % à température ambiante.

Lors d'une sollicitation sinusoïdale d'un mélange caoutchoutique, par exemple à déformation imposée, ε* = ε₀ e^{jωt}, la réponse en régime permanent de ce mélange est elle aussi sinusoïdale et déphasée d'un angle δ, σ* = σ₀ e^{j (ωt+δ)} On définit un module complexe G* = σ*/ε* = σ₀/ε₀ e^{jδ} = G' + jG", avec σ la contrainte en MPa. On appelle « module dynamique » G' et « module dynamique de perte » G". Le rapport tg δ = G"/G' est appelé facteur d'amortissement. Les mesures sont réalisées en sollicitation de cisaillement alterné à une fréquence de 10 Hz, à une température de 60°C et à une déformation dynamique crête à crête de 10 %.

Le pneumatique selon l'invention comporte une bande de roulement prolongée par deux flancs et deux bourrelets ainsi qu'un renforcement de carcasse ancré dans les deux bourrelets. Le pneumatique est composé sous la bande de roulement au moins par un renforcement de ceinture et par le renforcement de carcasse. Ce renforcement de carcasse, sous la bande de roulement, est constitué de fils tels que :
a) les fils du renforcement de carcasse disposés le plus vers l'intérieur du pneumatique sont en contact avec une première couche de gomme de liaison de bas module d'élasticité disposée radialement intérieurement relativement à ces fils ; et
b) les fils du renforcement de carcasse disposés le plus vers l'extérieur du pneumatique sont en contact avec une seconde couche de gomme de liaison disposée radialement extérieurement relativement à ces fils.
Ce pneumatique est caractérisé en ce que cette seconde couche de gomme de liaison est aussi en contact avec les fils du renforcement de ceinture disposés radialement le plus vers l'intérieur du pneumatique.

Le pneumatique selon l'invention a l'avantage de n'avoir, sous la bande de roulement, qu'une couche de gomme de liaison unique disposée entre le renforcement de carcasse et la première nappe sommet du renforcement de ceinture. Cela permet d'adapter la nature et les propriétés de cette couche de gomme de liaison unique en fonction de l'objectif du concepteur du pneumatique. Cela simplifie aussi la fabrication, alors que l'on a toujours considéré jusqu'à présent comme nécessaire d'avoir une gomme de liaison spécifique pour l'imprégnation des fils du renforcement de carcasse et une autre spécifique pour l'imprégnation des fils du renforcement de la ceinture.

A titre d'exemple, on peut choisir pour cette seconde couche de gomme de liaison unique un module d'élasticité élevé, compris entre 7 et 25 MPa et de préférence entre 9 et 15 MPa.

Cela donne un sommet dont la rigidité est très élevée ce qui lui confère une excellente résistance aux vitesses élevées.

Selon une autre variante de réalisation, on peut choisir pour cette seconde couche de gomme de liaison unique un module d'élasticité bas, inférieur à 6 MPa et de préférence compris entre 2 et 5 MPa. Cela permet de diminuer l'énergie hystérétique dépensée en roulage et donc de diminuer la résistance à l'avancement du pneumatique concerné.

Dans un mode de réalisation préférentiel, on choisit un mélange très faiblement hystérétique, par exemple de valeur de facteur d'amortissement tg δ inférieur à 0,08.

L'invention est maintenant décrite au moyen du dessin annexé dans lequel :
- la figure 1 présente en coupe transversale partielle un sommet de pneumatique usuel ;
- la figure 2 présente en coupe transversale partielle un sommet de pneumatique selon l'invention.

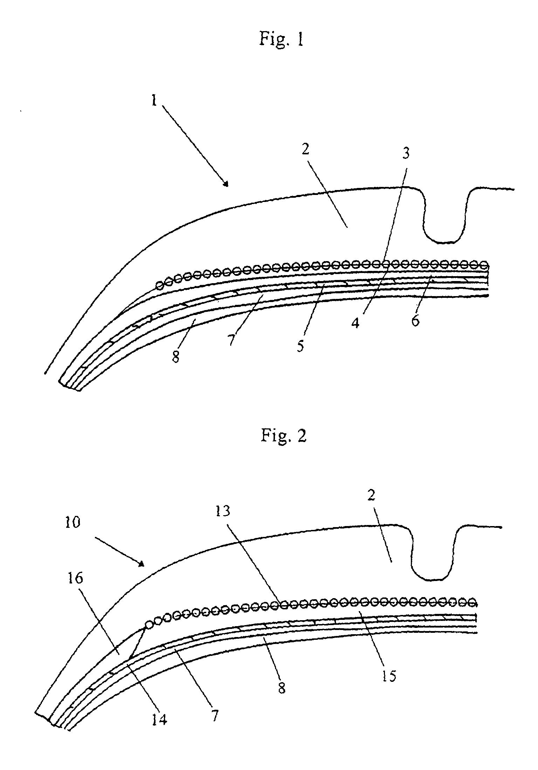

A la figure 1 est présenté, en coupe transversale partielle, un sommet de pneumatique usuel. Ce sommet 1 comprend notamment une bande de roulement 2, les fils 3 de la première nappe du renforcement de ceinture avec une première couche de gomme de liaison 4 disposée radialement intérieurement relativement aux fils 3, un renforcement de carcasse constitué d'un alignement circonférentiel de fils 5 avec, sous la bande de roulement 2, une seconde couche de gomme de liaison 6 disposée radialement extérieurement aux fils 5 et une couche de gomme de liaison 7 disposée radialement intérieurement aux fils 5 ; une gomme étanche 8 appelée «gomme intérieure» se trouve le long de la paroi intérieure du sommet 1.

Il y a donc entre les fils 3 de renforcement de la première nappe du renforcement de ceinture et les fils 5 du renforcement de carcasse deux couches 4 et 6 de gommes de liaison. Ces deux couches ont usuellement des propriétés mécaniques très différentes, la couche 4 ayant un haut module d'élasticité et la couche 6 ayant un bas module d'élasticité.

La figure 2 présente en coupe transversale partielle un sommet 10 de pneumatique selon l'invention. Ce sommet 10 se caractérise par l'existence d'une seule seconde couche de gomme de liaison 15 en contact avec les fils 13 de la première nappe du renforcement de ceinture et avec les fils 14 du renforcement de carcasse. Au-delà du sommet 10, dans la zone de flanc, les fils 14 du renforcement de carcasse sont en contact radialement extérieurement avec une troisième couche de gomme de liaison 16 de bas module d'élasticité. La séparation entre les couches 15 et 16 se situe ici exactement à l'extrémité de la nappe de renforcement du sommet. Il est toutefois possible selon le cas de décaler axialement cette limite soit vers l'extérieur soit vers l'intérieur.

Cette structure de sommet a donc l'avantage de présenter une couche de gomme de liaison de moins ce qui facilite la fabrication du pneumatique et diminue son coût.

Des pneumatiques 185/65 R 14 ont été réalisés avec les configurations suivantes :
- le témoin A comprenait un sommet avec deux couches 4, 6 de gomme de liaison entre les fils 5 du renforcement de carcasse et les fils 3 du renforcement de ceinture, une couche 6 de bas module d'élasticité (2,5 MPa) en contact avec les fils 5 et une couche de gomme de liaison 6 de haut module d'élasticité (13 MPa) en contact avec les fils 3 du renforcement de ceinture ;
- le pneumatique B avec une seule couche de gomme de liaison 15 entre les fils 14 du renforcement de carcasse et les fils 13 du renforcement de ceinture, cette gomme de liaison 15 ayant un haut module d'élasticité (13 MPa) ;
- le pneumatique C similaire au pneumatique B, mais avec la gomme de liaison unique 15 ayant un bas module d'élasticité (2,5 MPa).

Les résultats des essais ont montré une amélioration de rigidité longitudinale et transversale de l'ordre de 5 %, pour le pneumatique B relativement au témoin A, ainsi que de meilleures performances en tests de clivage et de résistance à haute vitesse, en revanche une déchéance en résistance à l'avancement à été enregistrée.

Le pneumatique C relativement au témoin a présenté un gain de l'ordre de 2 % en résistance à l'avancement.

Ces essais montrent l'intérêt de pouvoir ajuster la rigidité et l'hystérésis de la couche de gomme de liaison unique entre le renforcement de carcasse et la première nappe du renforcement de ceinture en fonction de l'objectif du concepteur du pneumatique.

Pour réaliser les différents pneumatiques selon l'invention, il est très avantageux de les confectionner sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Cette confection peut notamment utiliser les dispositifs décrits dans le brevet EP 0 243 851 pour la pose des fils du renfort de carcasse et EP 0 264 600 pour la pose des gommes caoutchoutiques. Le pneumatique peut être moulé et vulcanisé comme exposé dans le brevet US 4 895 692.

Les pneumatiques selon l'invention peuvent comporter un renforcement de carcasse composé d'un seul alignement circonférentiel de fils ancrés dans les deux bourrelets du pneumatique, dans ce cas les fils du renforcement de carcasse sont en contact radialement extérieurement avec la couche de gomme de liaison unique, comme on l'a décrit. Ces pneumatiques peuvent aussi comporter un renforcement de carcasse composé de plusieurs alignements circonférentiels de fils ancrés dans les deux bourrelets. Dans ce cas, seuls, bien entendu, les fils appartenant à l'alignement circonférentiel disposé radialement le plus à l'extérieur du pneumatique sont en contact avec la couche de gomme de liaison unique.

## Revendications

1. Pneumatique comportant une bande de roulement (2) prolongée par deux flancs et deux bourrelets, un renforcement de carcasse ancré dans les deux bourrelets, le pneumatique étant composé sous la bande de roulement (2) au moins par un renforcement de ceinture et par le renforcement de carcasse, ledit renforcement de carcasse étant constitué de fils (14), dans lequel, sous la bande de roulement :
a) les fils (14) du renforcement de carcasse disposés le plus vers l'intérieur du pneumatique sont en contact avec une première couche de gomme de liaison de bas module d'élasticité (7) disposée radialement intérieurement relativement auxdits fils (14) ; et
b) les fils (14) du renforcement de carcasse disposés le plus vers l'extérieur du pneumatique sont en contact avec une seconde couche de gomme de liaison (15) disposée radialement extérieurement relativement auxdits fils (14),
**caractérisé en ce que** ladite seconde couche de gomme de liaison (15) est aussi en contact avec les fils (13) du renforcement de ceinture disposés radialement le plus vers l'intérieur du pneumatique.

2. Pneumatique selon la revendication 1, dans lequel la seconde couche de gomme de liaison (15) disposée radialement extérieurement relativement auxdits fils (14) du renforcement de carcasse disposés le plus vers l'extérieur du pneumatique a un haut module d'élasticité.

3. Pneumatique selon la revendication 2, dans lequel un mélange de haut module d'élasticité a un module d'élasticité compris entre 7 et 25 MPa.

4. Pneumatique selon la revendication 3, dans lequel un mélange de haut module d'élasticité a un module d'élasticité compris entre 9 et 15 MPa.

5. Pneumatique selon la revendication 1, dans lequel la seconde couche de gomme de liaison (15) disposée radialement extérieurement relativement auxdits fils (14) du renforcement de carcasse disposés le plus vers l'extérieur du pneumatique a un bas module d'élasticité.

6. Pneumatique selon la revendication 5, dans lequel la seconde couche de gomme de liaison de bas module d'élasticité (15) disposée radialement extérieurement relativement aux fils du renforcement de carcasse disposés le plus vers l'extérieur du pneumatique a une valeur de facteur d'amortissement tg δ inférieure à 0,08.

7. Pneumatique selon l'une des revendications 1 à 6, dans lequel la ou les couches de gomme de liaison de bas module d'élasticité (7, 15) ont un module d'élasticité inférieur à 6 MPa.

8. Pneumatique selon la revendication 7, dans lequel la ou les couches de gomme de liaison de bas module d'élasticité (7, 15) ont un module d'élasticité compris entre 2 et 5 MPa.

9. Pneumatique selon l'une des revendications 1 à 8, dans lequel les fils (14) du renforcement de carcasse disposés le plus vers l'extérieur du pneumatique sont en contact, dans la zone des flancs, avec une troisième couche de gomme de liaison (16) disposée radialement extérieurement de bas module d'élasticité.

## Patentansprüche

1. Luftreifen mit einer Lauffläche (2), die durch zwei Flanken und zwei Wülste verlängert ist, und einer Karkassenverstärkung, die in den beiden Wülsten verankert ist, wobei der Reifen unter der Lauffläche (2) mindestens durch eine Gürtelverstärkung und durch die Karkassenverstärkung zusammengesetzt ist, wobei die Karkassenverstärkung aus Drähten (14) gebildet ist, und wobei unter der Lauffläche:
a) die Verstärkungsdrähte (14) der Karkasse, die am weitesten zur Innenseite des Reifens hin angeordnet sind, in Berührung mit einer ersten Schicht aus Verbindungsgummi mit niedrigem Elastizitätsmodul (7) stehen, die bezüglich dieser Drähte (14) radial innenliegt; und
b) die Verstärkungsdrähte (14) der Karkasse, die am weitesten zur Außenseite des Reifens hin angeordnet sind, in Berührung mit einer zweiten Schicht aus Verbindungsgummi (15) stehen, die bezüglich dieser Drähte (14) radial außenliegt,
**dadurch gekennzeichnet, daß** diese zweite Schicht aus Verbindungsgummi (15) auch in Berührung mit den Verstärkungsdrähten (13) des Gürtels steht, die radial am weitesten zur Innenseite des Reifens hin angeordnet sind.

2. Reifen nach Anspruch 1, worin die zweite Verbindungsgummischicht (15), die radial auf der Außenseite bezüglich der genannten Karkassen-Verstärkungsdrähte (14) angeordnet ist, die am weitesten zur Außenseite des Reifens hin angeordnet sind, einen hohen Elastizitätsmodul aufweist.

3. Reifen nach Anspruch 2, worin eine Mischung mit hohem Elastizitätsmodul einen Elastizitätsmodul hat, der zwischen 7 und 25 MPa liegt.

4. Reifen nach Anspruch 3, worin eine Mischung mit hohem Elastizitätsmodul einen Elastizitätsmodul hat, der zwischen 9 und 15 MPa liegt.

5. Reifen nach Anspruch 1, worin die zweite Verbindungsgummischicht (15), die radial außen bezüglich der genannten Drähte (14) der Karkassenverstärkung angeordnet ist, die am weitesten zur Außenseite des Reifens hin angeordnet sind, einen niedrigen Elastizitätsmodul hat.

6. Reifen nach Anspruch 5, worin die zweite Verbindungsgummischicht mit niedrigem Elastizitätsmodul (15), die radial außen bezüglich der Drähte der Karkassenverstärkung angeordnet ist, die am weitesten hin zur die Außenseite des Reifens hin angeordnet sind, einen Wert des Dämpfungsfaktors tg δ aufweist, der kleiner als 0,08 ist.

7. Reifen nach einem der Ansprüche 1 bis 6, worin der oder die Verbindungsgummi(s) mit niedrigem Elastizitätsmodul (7, 15) einen Elastizitätsmodul hat bzw. haben, der unter 6 MPa liegt.

8. Reifen nach Anspruch 7, worin der oder die Verbindungsgummi(s) mit niedrigem Elastizitätsmodul (7, 15) einen Elastizitätsmodul hat bzw. haben, der zwischen 2 und 5 MPa liegt.

9. Reifen nach einem der Ansprüche 1 bis 8, worin die am weitesten zur Außenseite des Reifens hin angeordneten Karkassen-Verstärkungsdrähte (14) in der Zone der Flanken mit einer dritten Verbindungsgummischicht (16) in Berührung stehen, die radial außenliegt und einen niedrigen Elastizitätsmodul aufweist.

## Claims

1. A tyre comprising a tread (2) extended by two sidewalls and two beads, a carcass reinforcement anchored in the two beads, the tyre being composed, under the tread (2), at least of a belt reinforcement and the carcass reinforcement, said carcass reinforcement being formed of cords (14), wherein, in the region under the tread:
a) the cords (14) of the carcass reinforcement which are arranged furthest toward the inside of the tyre are in contact with a first layer of bonding rubber of low modulus of elasticity (7) which is radially on the inside relative to said cords (14); and
b) the cords (14) of the carcass reinforcement which are arranged furthest toward the outside of the tyre are in contact with a second layer of bonding rubber (15) which is radially on the outside to said cords (14),
**characterised in that** said second layer of bonding rubber is also in contact with the cords (13) of the belt reinforcement which are arranged radially furthest toward the inside of the tyre.

2. A tyre according to claim 1, wherein the second layer of bonding rubber (15) that is radially on the outside relative to said cords (14) of the carcass reinforcement which are arranged furthest toward the outside of the tyre has a high modulus of elasticity.

3. A tyre according to claim 2, wherein a mix of high modulus of elasticity has a modulus of elasticity of between 7 and 25 MPa.

4. A tyre according to claim 3, wherein a mix of high modulus of elasticity has a modulus of elasticity of between 9 and 15 MPa.

5. A tyre according to claim 1, wherein the second layer of bonding rubber (15) that is radially on the outside relative to said cords (14) of the carcass reinforcement which are arranged furthest toward the outside of the tyre has a low modulus of elasticity.

6. A tyre according to claim 5, wherein the second layer of bonding rubber of low modulus of elasticity (15) arranged radially toward the outside relative to the cords of the carcass reinforcement which are arranged furthest toward the outside of the tyre has a damping factor tan δ value of less than 0.08.

7. A tyre according to one of claims 1 to 6, wherein the layer or layers of bonding rubber of low modulus of elasticity (7, 15) has/have a modulus of elasticity of less than 6 MPa.

8. A tyre according to claim 7, wherein the layer or layers of bonding rubber of low modulus of elasticity (7, 15) has/have a modulus of elasticity of between 2 and 5 MPa.

9. A tyre according to one of claims 1 to 8, wherein the cords (14) of the carcass reinforcement that are furthest toward the outside of the tyre are in contact, in the sidewall zone, with a third layer of bonding rubber (16) arranged radially externally of low modulus of elasticity.
